# NEUE EUROPÄISCHE PATENTSCHRIFT

(11) **EP 0 510 738 B2**
(45) Veröffentlichungstag und Bekanntmachung des Hinweises auf die Entscheidung über den Einspruch: **23.08.2000**
(45) Hinweis auf die Patenterteilung: 23.11.1994
(21) Anmeldenummer: 92200752.1
(22) Anmeldetag: 17.03.1992
(51) Int. Cl.: B60R 21/20

(54) **Gassack-Aufprallschutzvorrichtung**
Aircushion restraint device
Dispositif de protection à coussin gonflable

(30) Priorität: 20.04.1991 DE 4112939
(43) Veröffentlichungstag der Anmeldung: 28.10.1992
(73) Patentinhaber: KOLBENSCHMIDT Aktiengesellschaft, D-74150 Neckarsulm (DE)
(72) Erfinder: Kreuzer, Martin, D-63839 Kleinwallstadt (DE); Barrenscheen, Frank, D-63762 Grossostheim (DE)
(74) Vertreter: Degwert, Hartmut, Dipl.-Phys.

(56) Entgegenhaltungen:
- DE-A- 2 643 451
- FR-A- 2 125 899
- FR-A- 2 652 321
- US-A- 4 325 568

## Beschreibung

Die Erfindung betrifft eine Gassack-Aufprallschutzvorrichtung für Kraftfahrzeuge nach dem Oberbegriff des Patentanspruchs 1.

Bei einem möglichen Frontalaufprall bzw. einem Unfall mit kleiner Winkelabweichung der Stoßrichtung auf ein massives Hindernis eines mit einer üblichen Gassack-Aufprallschutzvorrichtung ausgerüsteten Kraftfahrzeugs beginnt der Fahrgast aufgrund seiner Massenträgheit in Bewegungsrichtung zu rutschen. Nach etwa 10 ms beginnt der Gassack infolge der Zündung des im Gasgenerator enthaltenen Treibmittels sich aufzublasen. Nach etwa 40 bis 50 ms schlägt der Oberkörper des Fahrgasts auf den nun voll aufgeblasenen Gassack, dessen Aufblaszeit etwa 30 ms beträgt. Über entsprechend angebrachte Ausströmöffnungen läßt der Gassack sofort das Gas genau definiert entweichen, so daß der Körper weich und ohne große Rückprallkräfte aufgefangen wird. Gleichzeitig bewegen sich die Knie in Richtung des unteren Teils des Armaturenbretts, wobei ggf. eine Gassack-Aufprallschutzvorrichtung auch in diesem Bereich angebracht sein kann.

Bei bekannten, in Lenkrädern integrierten Gassack-Aufprallschutzvorrichtungen ist die den zusammengefalteten Gassack, den Gasgenerator und das den Gassack und den Gasgenerator aufnehmende Gehäuse tragende Baueinheit fahrgastraumseitig mit einem aus Polyurethan-Integralschaum bestehenden Polster, das mit einem rund um das Gehäuse angeordneten Flansch verbunden ist, ausgestattet. Das als Abdeckung und Schutzhülle dienende Polster reißt bei einem möglichen Aufprall des Kraftfahrzeugs auf ein massives Hindernis unter dem Druck des sich aufblasenden Gassacks längs genau definierter Stellen (Aufreißlinien), an denen die Wanddicke 0,5 ± 0,2 mm beträgt, auf. Dabei muß neben dem Ablösen auch das Zerreissen oder Lösen von kleinsten Teilen des Polsters bei allen in diesem Zusammenhang denkbaren Temperaturen unbedingt vermieden werden. Dies wird durch spezielle in das Polster eingeschäumte Einlegeteile erreicht, die aus Metallblech (DE-U-8 713 154), aus Gewebelappen (DE-C-2 905 618), aus einer Kombination von Metallblech mit Kunststoff (DE-A-3 707 370), aus einem Schichtverbund zweier verschiedener thermoplastischer Kunststoffe (DE-A-3 942 694) oder aus einer Schicht eines thermoplastischen Kunststoffs (DE-A-3 837 085) bestehen.

Auf solche Polster, deren Herstellung infolge der konstruktiven Auslegung der Einlegeteile und der Sollbruchstellen einen vergleichsweise beachtlichen Aufwand erfordern, kann jedoch verzichtet werden, wenn die Gassack-Aufprallschutzvorrichtung im Frontteil des Fahrgastraums hinter einer Austrittsöffnung, vorzugsweise des Armaturenbretts, eingebaut ist und die Austrittsöffnung durch eine nach oben in Richtung der Windschutzscheibe schwenkbare Klappe verschlossen ist (DE-A-3 605 623, DE-A-3 835 581). Im Bereich der Austrittsöffnung und der Klappe kann das Armaturenbrett durchgehend mit einem aufreißbaren Material überzogen sein und die Sollbruchstellen zwischen den Randbereichen der Austrittsöffnung und der Klappe in dem aufreißbaren Material liegen, wie dies in der DE-A-3 918 281 vorgesehen ist.

Eine gattungsgemäße Gassack- Aufprallschutzvorrichtung ist aus der EP-A-0 415 362 bekannt, wobei die zum Verschließen der Öffnung des Gehäuses vorgesehene Folie perforiert ist und in das Innere des Gehäuses ragt.

Aufgabe der Erfindung ist es, eine Vorrichtung zuschaffen, die einfach aufgebaut ist, noch zuverlässiger vor Eindringen von Staub und Schmutz in das Gehäuse schützt und die zudem eine hohe Funktions sicherheit bietet.

Gelöst ist diese Aufgabe durch die Merkmale des Anspruchs 1.

Die Folie, die vorzugsweise das Gehäuse ganz oder teilweise umschließt, hat vorzugsweise eine Wanddicke von 40 bis 200 µm, die sich nach der konstruktiven Auslegung des Gehäuses sowie nach dem Öffnungsdruck des Gassacks beim Aufblasen richtet.

Um ein unkontrolliertes Absprengen der Folie beim Aufblasen des Gassacks zu verhindern, sind auf einem Teil des Umfangs am Randbereich der Öffnung des Gehäuses auf dessen Außenseite scharfkantige, vorzugsweise sägezahnförmige Ausstellungen vorgesehen, die beim Ansteigen des Gasdrucks im Gassack auf die Folie perforierend wirken und die Folie entlang der perforierten Linien aufreißt. Entscheidend ist dabei, daß eine Zugspannung in der Perforationszone von 15 N/mm² nicht überschritten wird. Die geöffnete Folie bleibt anschließend an dem Abschnitt, in dem keine scharfkantigen Ausstellungen auf der Außenseite des Gehäuses angebracht sind, mit dem Gehäuse verbunden, während der Gassack die im Frontteil des Fahrgastraums befindliche Klappe öffnen kann.

Die Folie ist auf das Gehäuse aufgeschrumpft und besteht aus üblichen thermoplastischen Kunststoffen, wie Polyethylen, Polypropylen, Polyvinylchlorid, Polyethylenterephthalat oder dergleichen.

Es ist jedoch auch möglich, anstelle von Folien aus thermoplastischem Kunststoff Folien aus gummielastischem Material zu verwenden.

Die Erfindung ist in den Zeichnungen beispielhaft dargestellt und wird nachfolgend näher erläutert.

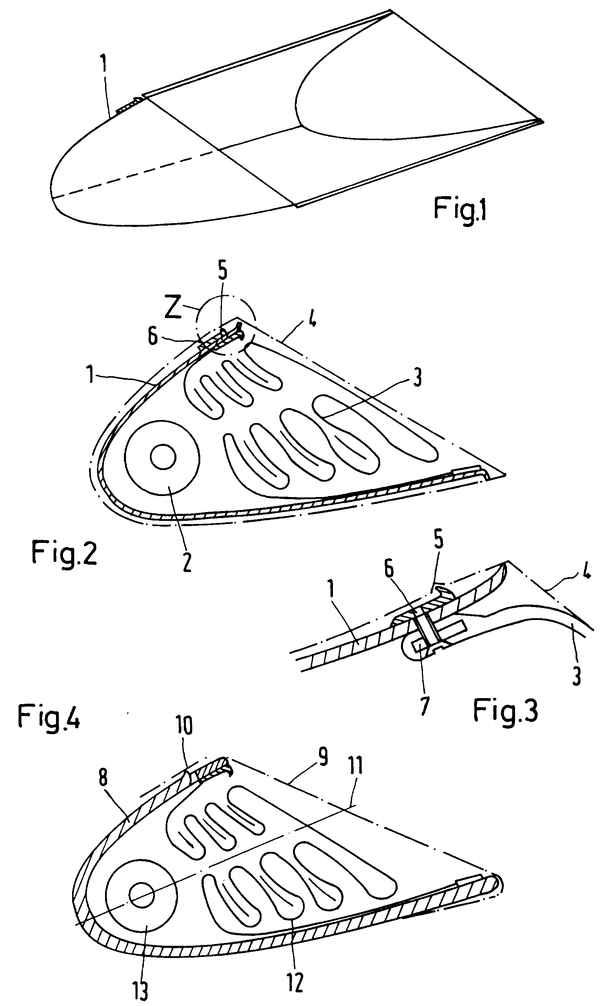

In Fig. 1 ist das Schaubild des taschenartigen Gehäuses (1) für die Aufnahme des Gasgenerators (2) und des Gassacks (3) dargestellt.

Bei dem in Fig. 2 wiedergegebenen, in Bewegungsrichtung des Kraftfahrzeugs geführten Schnitt durch die erfindungsgemäß gestaltete Gassack-Aufprallschutzvorrichtung, von der Fig. 3 das Detail "Z" vergrößert zeigt, sind in dem aus Stahlblech mit einer Wanddicke von 1,25 mm bestehenden Gehäuse (1) der ein Feststoff-Treibmittel enthaltende Gasgenerator (2) und der zusammengefaltete aufblasbare Gassack (3) untergebracht. Die fahrgastraumseitige Öffnung des Gehäuses (1) ist durch eine auf das Gehäuse (1) aufgeschrumpfte und dieses ganz umschließende Folie (4) aus Polyethylen mit einer Wanddicke von 50 µm abgedeckt. Im Randbereich der Öffnung ist auf der Außenseite des Gehäuses (1) auf dem zur Windschutzscheibe weisenden Abschnitt eine scharfkantige, Sägezähne (5) aufweisende Blechleiste (6) aufgeschweißt. Der Rand der Öffnung des Gassacks (3) wird durch die Arretierleiste (7) gegen die Innenseite des Gehäuses (1) gedrückt.

Bei der in Fig. 4 dargestellten Gassack-Aufprallschutzvorrichtung ist das Gehäuse (8) durch eine auf dessen äußeren Randbereich aufgeschrumpfte Folie (9) aus Polypropylen abgedeckt. Im äußeren Randbereich der Öffnung sind unmittelbar aus der Wand des Gehäuses (8) ausgedrückte, zahnförmige Ausstellungen (10) angeordnet, die beim Aufblasen des Gassacks die Folie (9) perforieren. Diese Abdeckung ist dann möglich, wenn der Winkel zwischen der Mittelachse (11) des Gehäuses (8) und der Gehäusewand größer 0° ist. In dem Gehäuse (8) ist der zusammengefaltete Gassack (12) und der Gasgenerator (13) angeordnet.

Der aus der DE-A-3 742 656 bekannte Gasgenerator (2) besteht aus einem Druckbehälter in Verbindung mit einem Anzündelement, wobei nach dessen Initiierung eine gasfreisetzende Substanz im Druckbehälter verbrannt wird und das Gas durch mit Filter abgedeckte Öffnungen in der Wand des Druckbehälters in einen darüber angeordneten Gassack strömt. An einem das Anzündelement enthaltenden Zentralkörper sind strahlenförmig zwei rohrförmige Druckbehälter befestigt, in denen die gasfreisetzenden Substanzen in Form von stapelbaren Presslingen untergebracht sind.

## Patentansprüche

1. Gassack-Aufprallschutzvorrichtung, bestehend aus einer Baueinheit, die einen zusammengefalteten Gassack (3, 12), einen Treibmittel enthaltenden Gasgenerator (2, 13) und ein den Gassack und den Gasgenerator aufnehmendes Gehäuse (1, 8) umfaßt, für den Einbau in Kraftfahrzeuge, bei denen im Frontteil des Fahrgastraumes eine Austrittsöffnung vorgesehen ist, die von einer nach oben schwenkbaren Klappe verdeckt ist, deren quer zur Bewegungsrichtung des Kraftfahrzeugs verlaufender oberer Rand mit dem daran angrenzenden Rand der Austrittsöffnung über einen Scharnierbereich verbunden ist, wobei die im Einbauzustand hinter der Klappe angeordnete Öffnung des Gehäuses (1, 8) durch eine Folie (4, 9) verschlossen ist, **dadurch gekennzeichnet**, daß die Folie (4, 9) auf der Außenseite des Gehäuses aufgebracht ist und daß im Außenrandbereich der Öffnung des Gehäuses (1, 8) auf einem Teil des Umfangs scharfkantige, vorzugsweise sägezahnförmige Ausstellungen (5, 10) angebracht sind.

2. Gassack-Aufprallschutzvorrichtung nach Anspruch 1, **dadurch gekennzeichnet**, daß die Folie (4, 9) das Gehäuse (1, 8) ganz oder teilweise umschließt.

3. Gassack-Aufprallschutzvorrichtung nach den Ansprüchen 1 und 2, **dadurch gekennzeichnet**, daß die Wanddicke der Folie (4, 9) 40 bis 200 µm beträgt.

4. Gassack-Aufprallschutzvorrichtung nach den Ansprüchen 1 bis 3, **dadurch gekennzeichnet**, daß die Zugspannung in der Perforationszone der Folie (4, 9) höchstens 15 N/mm² beträgt.

## Claims

1. An airbag impact protection means, consisting of an assembly unit comprising a folded-up airbag (3; 12), a gas generator (2; 13) containing a propellant, and a housing (1; 8) receiving the airbag and the gas generator, the assembly unit being intended for installation in motor vehicles in which an exit opening is provided in the front part of the passenger compartment, the exit opening being covered by an upwardly pivotable flap, the upper edge of which, which runs transversely to the direction of movement of the motor vehicle, is connected to the adjoining edge of the exit opening via a hinge region, the opening of the housing (1; 8) arranged behind the flap in the installed condition being closed by a film (4, 9), characterised in that the film (4; 9) is applied to the outside of the housing and that sharp-edged, preferably sawtooth-shaped projections (5, 10) are arranged in the external edge area of the opening of the housing (1, 8) on a portion of the periphery.

2. The airbag impact protection means according to Claim 1, characterised in that the film (4, 9) completely or partly surrounds the housing (1, 8).

3. The airbag impact protection means according to Claims 1 and 2, characterised in that the wall thickness of the film (4, 9) is 40 to 200 µm.

4. The airbag impact protection means according to Claims 1 to 3, characterised in that the tensile stress in the perforation zone of the film (4, 9) is at most 15 N/mm².

## Revendications

1. Dispositif de protection contre les chocs à coussin gonflable, constitué d'une unité de construction, qui comprend un coussin gonflable replié (3, 12), un générateur de gaz (2, 13) contenant un agent propulseur, ainsi qu'un boîtier (1, 8) logeant le coussin gonflable et le générateur de gaz, et qui peut être monté dans des véhicules automobiles, dans lesquels une ouverture de sortie est prévue dans la partie avant de l'habitacle, ouverture de sortie fermée par un volet pivotant vers le haut, dont le bord supérieur s'étendant transversalement à la direction de déplacement du véhicule automobile, est relié au bord de l'ouverture de sortie, qui est contigu audit bord, par l'intermédiaire d'une partie faisant charnière, l'ouverture du boîtier (1, 8) qui, à l'état monté, est disposée derrière le volet, étant fermée par une feuille (4, 9), **caractérisé en ce que** la feuille (4, 9) est déposée sur le côté extérieur du boîtier et en ce que des appendices saillants à arêtes vives, de préférence en forme de dents de scie (5, 10), sont disposés dans la zone du bord extérieur de l'ouverture du boîtier (1, 8), sur une partie de la périphérie.

2. Dispositif de protection contre les chocs à coussin gonflable selon la revendication 1, caractérisé en ce que la feuille (4, 9) entoure en totalité ou en partie le boîtier (1, 8).

3. Dispositif de protection contre les chocs à coussin gonflable selon l'une des revendications 1 et 2, caractérisé en ce que l'épaisseur de la feuille (4, 9) est comprise entre 40 et 200 µm.

4. Dispositif de protection contre les chocs à coussin gonflable selon l'une des revendications 1 à 3, caractérisé en ce que la containte de traction dans la zone de perforation de la feuille (4, 9) est égale au maximum à 15 N/mm².
